# EUROPÄISCHE PATENTANMELDUNG

(11) **EP 1 374 683 A1**
(43) Veröffentlichungstag der Anmeldung: **02.01.2004**
(21) Anmeldenummer: 02014308.7
(22) Anmeldetag: 27.06.2002
(51) Int. Cl.: A21C 1/06, A21C 1/14, A21C 1/00, B01F 7/14, B01F 15/02

(54) **Verfahren und Vorrichtung zur Dosierung und Einbringung von Zutaten in eine Knetmaschine**

(71) Anmelder: Artos S.A., 1150 Luxembourg (LU)
(72) Erfinder: Torghele, Claudio, 6962 Viganello (CH); Capovilla, Andrea, 38060 Isera (TN) (IT)
(74) Vertreter: Oberosler, Ludwig

(57) **Zusammenfassung**

Vorrichtung zur Dosierung und Einbringung von Zutaten in eine Knetmaschine (C) zur Herstellung kleiner Teigmengen für die Zubereitung einzelner Pizzas, Fladen oder dergleichen, wobei sei es für die mehlhaltigen Zutaten (F) als auch für die flüssigen Zutaten (W) jeweils ein spezifischer Messbecher (11a, 5b) vorgesehen ist welcher unterhalb des betreffenden Behälters der Zutaten und oberhalb der Knetmaschine (C) angeordnet ist und in welchen die Zutaten durch Gefälle zuströmen, bzw. aus welchen sie durch Gefälle abströmen.

## Beschreibung

Die Erfindung bezieht sich auf ein Verfahren und auf die entsprechende Vorrichtung zur Dosierung und Einbringung von mehlartigen und flüssigen Zutaten in eine Knetmaschine für die Herstellung von kleinen Teigmengen, insbesondere von Teigportionen welche für die Zubereitung von Fladen, einzelner Pizzas und dergleichen geeignet ist.

Aus der WO 01/85323 ist eine Dosiervorrichtung für mehlartige Zutaten, welcher auf eine Knetmaschine für die Herstellung von Teigportionen aufgebaut ist, bekannt; die Praxis hat gezeigt, dass diese Dosiervorrichtung, wegen der Veränderung des Mehlstandes im Behälter und wegen dem unterschiedlichen Füllgrad und/oder Komprimierungsgrad des Mehles im Dosierungshohlraum, nicht eine genügend präzise und gleichmäßige Dosierung für die Zubereitung von relativ kleinen Teigportionen ermöglicht. Dies wird weiters dadurch verschlimmert, dass auch die bekannten Beschickungssysteme für die flüssigen Zutaten (Wasser) nicht genügend präzise sind weil sie allgemein Pumpen, insbesondere Membranpumpen, Peristaltikpumpen oder Kolbenpumpen, einsetzen. Zwecks Einstellung der einzubringenden Menge an Flüssigkeit wird die Betriebszeit der Pumpe eingestellt; dieses System bewirkt Dosierungsfehler von ca. 7%.
Wenn die Dosierung des Mehls mit einem Fehler erfolgt welcher ein Manko in Bezug auf die ideale Dosis bewirkt und hingegen die Dosierung des Wassers mit einem Fehler erfolgt welcher einen Überschuss in Bezug auf die ideale Dosis bewirkt, so wird der Teig in keiner Weise den Anforderungen für seine Weiterverarbeitung entsprechen. Das selbe geschieht bei einer Dosierung des Mehls mit Überschussfehler und einer Dosierung des Wassers mit Mankofehler. Wenn sich die oben erwähnten Fehler einstellen wird der Teig unbrauchbar sein und er muss als solcher von einem Überwachungssystem erkannt werden und ausgeschieden werden; aber auch im Falle von weniger ausgeprägten Dosierungsfehlern wird, insbesondere die Qualität des Endproduktes, nachteilig beeinflusst.

Die Erfindung stellt sich die Aufgabe ein Verfahren und eine entsprechende Vorrichtung zur Dosierung und Einbringung von Zutaten in eine Knetmaschine zu schaffen, welche für die Herstellung von kleinen Teigmengen geeignet ist, wobei die Vorrichtung einfach im Aufbau, leicht zerlegbar und reinigbar ist und das Verfahren geeignet ist Dosiermengen von beachtlicher Präzision zu garantieren so dass eventuelle Dosierfehler sehr beschränkt sind und nicht dazu führen, dass der Teig für die folgende Verarbeitung ungeeignet ist, bzw. nicht dazu führen, dass betreffend die Qualität des Endproduktes ein merkbarer Unterschied feststellbar ist.

Für die Lösung dieser Aufgabe schlägt die Erfindung für die mehlartigen Zutaten ein Dosiergerät mit Messbehälter vor, welcher mit einem Stößel ausgestattet ist und welcher eventuell auf unterschiedlichem Füllstand beladbar ist, weiters dient dieser Messbehälter auch für die Einbringung der Dosis in die Knetmaschine; für die flüssigen Zutaten hingegen wird ein Dosiergerät vorgeschlagen welches auf Gefälle arbeitet und ein doppelt wirkendes Ventil aufweist welches in der unteren Arbeitsposition das Füllen des, betreffend das Volumen, kalibrierbaren Messbechers ermöglicht während in der folgenden oberen Arbeitsposition der Abfluss der Dosis an Flüssigkeit durch Freigabe des Zuflusses von filtrierter Außenluft erfolgt.

Der Messbehälter für die mehlartigen Zutaten hat vorzugsweise zylindrische Form und ist zwischen dem zylindrischen Behälter für das Mehl und der oberen, mit verstellbarem Schieber ausgestatteten, Öffnung der Knetmaschine eingebaut. Der zylindrische Messbehälter ist im Umfangsbereich des kreisflächenförmigen Bodens des zylindrischen Mehlbehälters angebracht und wird progressiv durch ein sich drehendes, über Elektromotor angetriebenes, Speichenrad gefüllt. Das Speichenrad liegt auf dem Behälterboden auf und ist drehbar, zusammen mit Rührelementen, koaxial im zylindrischen Behälter gelagert. Die Freiräume, zwischen den radial abstehenden Speichen, welche ungefähr dem kreisrunden Querschnitt des Messbehälters entsprechen, werden durch das Mehl welches darüber im Behälter gelagert ist gefüllt; durch Drehen des Speichenrades wird das Mehl in den Bereich über dem zylindrischen Messbehälter gebracht wo es frei nach unten in den Messbehälter fällt. Nach dem Vorbeibewegen von mehreren Freiräumen des Speichenrades wird, nachdem der Messbehälter mit Mehl gefüllt ist, ein über dem Messbehälter vorgesehener Stößel aktiviert um das im Messbehälter enthaltene Mehl zu komprimieren. Anschließend, bei hochgefahrenem Stößel, wird erneut das Speichenrad angetrieben um den Freiraum welcher sich infolge der Kompression durch den Stößel gebildet hat, mit Mehl aufzufüllen. Diese Arbeitsgänge werden eventuell mehrmals wiederholt, bis der Messbehälter randvoll mit Mehl gefüllt ist, der Komprimierungsgrad des Mehles hängt dabei von der Anzahl der Komprimierungszyklen des Stößels ab. Durch eine weitere Drehung des Speichenrades wird die Mehldosis eben zum Messbehälterrand abgeschabt worauf sich der Schieber der Beschickungsöffnung der Knetmaschine öffnet und die Mehldosis durch den Stößel aus dem Messbecher geschoben wird um in den Knetraum zu fallen. Natürlich erfolgt die Bewegung des Speichenrades synchron zur Bewegung des Stößels und um den Messbecher mit Mehl zu füllen kann zuerst eine Drehung um einen bestimmten Winkel erfolgen so dass der Messbecher vollständig gefüllt wird, nach einer Komprimierungsfase durch den Stößel erfolgt eine weitere Drehung des Speichenrades um einen eventuell kleineren Winkel und schließlich, nach erfolgter Füllung und Komprimierung, wird durch erneute Drehung der Inhalt eben zum Rand des Messbehälters abgeschabt.
Dieses Dosierverfahren ermöglicht es konstante, bemerkenswert präzise Mehldosiermengen zu erhalten mit der Möglichkeit die Anzahl der Komprimierzyklen aufgrund der Mehleigenschaften zu variieren.

Der Dosierer für Wasser, bzw. für die flüssigen Zutaten, besteht erfindungsgemäß aus einem Messbehälter welcher im oberen Bereich eine Öffnung für den Zufluss durch Gefälle aus einem Wasserbehälter und ein Ventil für den Zufluss von filtrierter atmosphärischer Luft aufweist, während im unteren Beeich der selbe Messbehälter eine Abflussöffnung aufweist. Im Innern des Messbehälters agiert ein doppelt wirkendes Ventil welches durch axiales, z.B. pneumatisches, Verschieben den Zufluss und Abfluss des Wassers und das Ventil für den Zufluss der atmosphärischen Luft steuert. Die Füllmenge des Messbehälters kann durch Einlegen ins Innere des Messbehälters von Ringen, welche unterschiedliche Volumen einnehmen, variiert werden.

Die Betätigung des doppelt wirkenden Ventils kann durch einen Pneumatik-Kolben, welcher in einem zum Messbehälter koaxialem und unterhalb der Abflussöffnung vorgesehenem Zylinder verschiebbar ist, erfolgen. In diesem Fall ist die Kolbenstange, welche den Kolben mit dem doppelt wirkenden Ventil verbindet, rohrförmig und der Abfluss erfolgt durch die Kolbenstange hindurch. Es wird jedoch nicht ausgeschlossen, dass der Zylinder für den Pneumatik-Kolben koaxial über dem Messbehälter angeordnet ist und in diesem Fall kann die Kolbenstange welche das doppelt wirkende Ventil bewegt vollen Querschnitt aufweisen.

Die Betätigung des Ventils für den Zufluss der atmosphärischen Luft, welche den freien Abfluss der Flüssigkeitsdosis aus dem Messbehälter zur Knetmaschine bewirkt, erfolgt durch das doppelt wirkende Ventil selbst welches einen ringförmig abstehenden Kragen aufweist welcher, in seiner Bewegung nach oben und somit bei Öffnung der Abflussöffnung, auf die Stange des Ventils für die Luftzufuhr trifft und durch Komprimieren einer einstellbaren Feder für die Rückstellung des Ventils in Schließstellung, das Ventil öffnet. Durch Öffnen des Ventils für die Zufuhr atmosphärischer Luft in den Messbehälter, kann die Flüssigkeitsdosis durch Gefälle frei in Richtung Knetmaschine abfließen. Die koaxiale Anordnung zwischen Messbehälter, dessen Kopfteil, dem Ventilkörper und dem Betätigungskolben, ermöglicht einen einfachen Aufbau welcher eine Demontage und Montage ohne Werkzeuge und eine einfache Reinigung ermöglicht.

Die Erfindung wird anschließend anhand eines, in den beigelegten Zeichnungen schematisch dargestellten, Ausführungsbeispieles der erfindungsgemäßen Dosierund Einbringvorrichtung von Zutaten in eine Knetmaschine näher erklärt; dabei haben die Darstellungen rein erklärenden, nicht begrenzenden Zweck.

Die Fig. 1 zeigt in schematischer Vorderansicht und teilweise in Schnittdarstellung eine Knetmaschine welche an eine erfindungsgemäße Vorrichtung für die Dosierung und die Einbringung von mehlartigen und flüssigen Zutaten angeschlossen ist.

Die Fig. 2 zeigt schematisch und in vergrößertem Maßstab die in Fig. 1 dargestellte Vorrichtung für die Dosierung und Einbringung der flüssigen Zutaten in Beladungsfase mit dem doppelt wirkenden Ventil in unterer Arbeitsstellung wobei der Zufluss frei und der Abfluss verschlossen ist.

Die Fig. 3 zeigt die in Fig. 2 dargestellte Vorrichtung für die Dosierung und Einbringung von flüssigen Zutaten mit dem doppelt wirkenden Ventil in oberer Arbeitsstellung wobei der Zufluss der Flüssigkeit unterbrochen ist und der Abfluss der Flüssigkeitsdosis aus dem Messbecher sowie der Zufluss der atmosphärischen Luft in den Messbecher geöffnet sind.

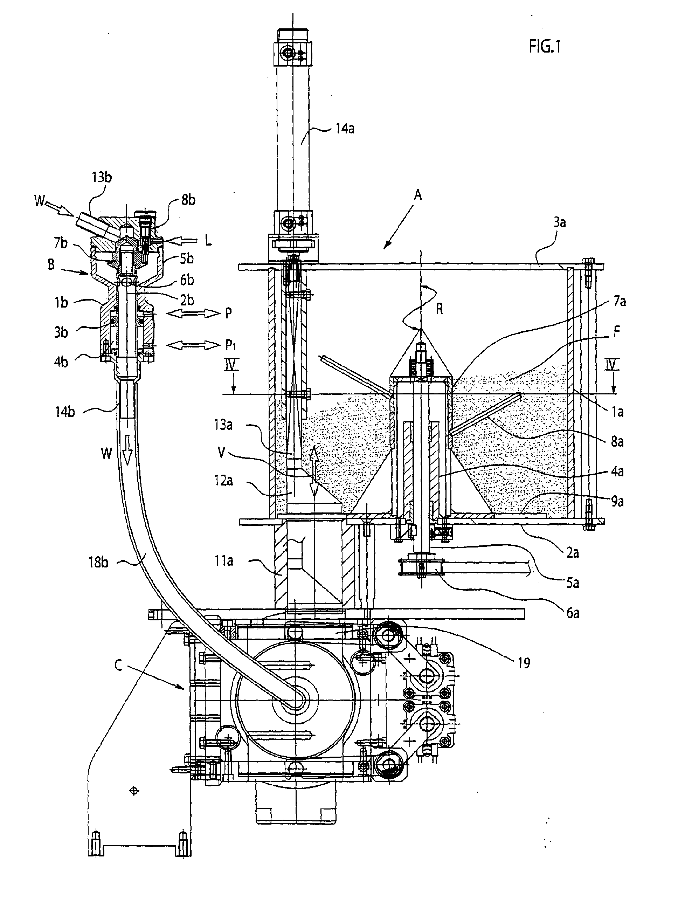

Die Fig. 3 ist eine Schnittdarstellung gemäß der in Fig. 1 gezeigten Schnittebene IV-IV welche horizontal durch den Behälter für die mehlartigen Zutaten mit erfindungsgemäßer Dosier- und Einbringvorrichtung verläuft.

Die Knetmaschine C ist im oberen Bereich mit einem Schieber 19 für die Öffnung und den Verschluss der Einbringöffnung für die mehlartigen Zutaten versehen während axial ein Einbringschlauch 18b für die flüssigen Zutaten vorgesehen ist. Über dem Schieber 19 ist ein zylindrischer Messbecher 11a für die Dosierung der mehlartigen Zutaten F befestigt welche in einem Behälter A mit Mantelwand 1a, Boden 2a und Deckel 3a enthalten sind. Im Innern des zylindrischen Behälters A ist eine Welle 5a drehbar R, koaxial zur Achse des Behälters A gelagert; diese Welle trägt am oberen Ende ein koaxiales Rohrelement 7a welches mit radial abstehenden Rührelementen 8a ausgestattet ist während am unteren Ende des Rohrelementes ein am Boden 2a aufliegendes Speichenrad 9a als Ladevorrichtung mit Speichen 9e und freien Zwischenräumen 9d befestigt ist. An ihrem unteren Ende ist die Welle 5a mit einer Riemenscheibe 6a versehen welche von einem (nicht dargestellten) Motor angetrieben wird. Durch Drehung R der Welle 5a wird, über das Rohrelement 7a, das als Ladevorrichtung funktionierende Speichenrad 9a bewegt, wodurch das Mehl F welches durch Schwerkraft die Freiräume 9d zwischen den Speichen 9e ausfüllt, über die obere Füllöffnung des darunter vorgesehenen Messbechers 11a geschoben wird; das Mehl fällt dabei nach unten und füllt progressiv den Messbecher 11a. In Zeitabständen oder nach vollständigem Füllen des Messbechers 11a, wird die Ladevorrichtung 9a, mit einem der Freiräume 9d entsprechend der Position der oberen Füllöffnung des Messbechers 11a, angehalten und das im Messbecher enthaltene Mehl, durch Bewegung V der Stange 13a des Stößels 12a mittels Zylinder 14a, im Messbecher komprimiert. Anschließend, wenn der Stand des komprimierten Mehles im Innern des Messbehälters 11a den oberen Rand des Messbehälters 11a erreicht hat, wird, infolge einer Abspachtelung durch Drehung R des Speichenrades 9a, bei geöffnetem Schieber 19, die Mehldosis durch den Stößel aus den Messbecher geschoben um in die Knetmaschine zu fallen. Die Mehldosis kann durch Verändern der Anzahl der Komprimierungszyklen des Stößels verändert werden; es wird allerdings die Möglichkeit nicht ausgeschlossen die Dosis durch Ändern der Druckkraft des Stößels und/oder durch Ändern des Standes des Mehles innerhalb des Messbechers 11, zu verändern.

Das Wasser, bzw. die flüssigen Zutaten W, werden durch den Dosierer B abgemessen welcher aus einem zylindrischen Körper mit oberem, durch ein Kopfteil 15d verschlossenem, Messbecher 5b besteht; der untere Bereich weist einen, durch Kopfteil 4f verschlossenen, Zylinder 1b auf, in welchem ein Kolben 3b durch, über die Öffnungen 4d, 4e in den Hohlraum 4b des Zylinders 1b eingeleitete Druckluft P - P1, bewegt D - S wird. Der Kolben 3b ist mit einer rohrförmigen Kolbenstange 2b verbunden, deren oberes Ende ein doppelt wirkendes Ventil trägt welches aus dem Korpus 7b mit einer oberen Dichtung 11b, einer unteren Dichtung 12b und einem radial abstehendem Kragen 10b, besteht.

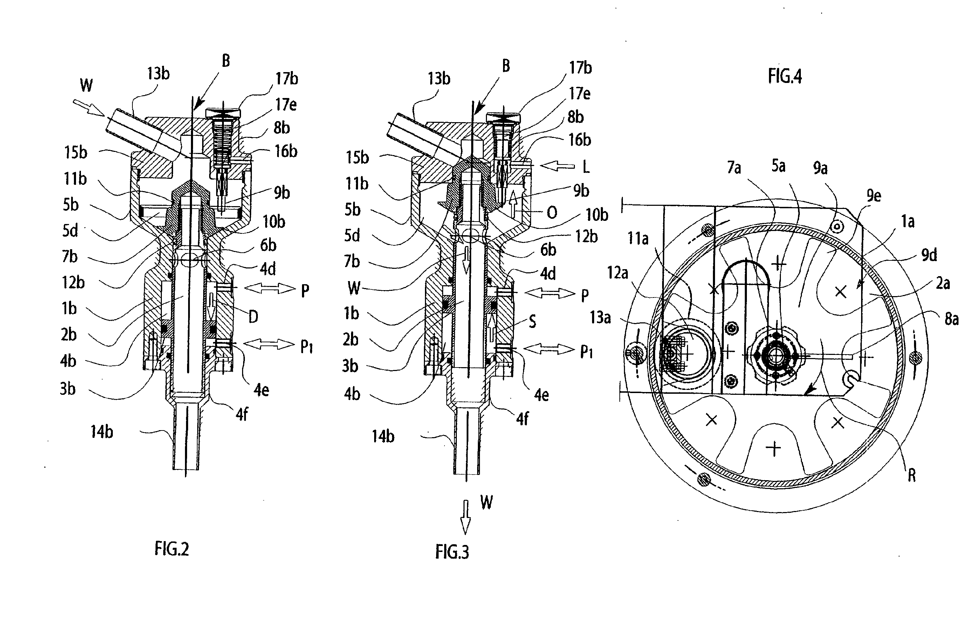

Wenn der Korpus 7b des doppelt wirkenden Ventils die untere Stellung einnimmt, kann das Wasser, bzw. können die flüssigen Zutaten W durch Gefälle, aus einem höher gelegenen Behälter, über einen Anschlussstutzen 13b in den Raum des, mittels Einlegen von einem oder mehreren Ringen 5d eichbaren, Messbechers 5b zufließen; die im Messraum enthaltene Luft strömt dabei durch den Anschlussstutzen 13b in den höher gelegenen Wasserbehälter. Während dieser Beladung des Messbechers 5b ist der Abfluss des Wassers W in die Knetmaschine C durch die Dichtung 12b unterbrochen. Nachdem der Messbecher 5b vollständig gefüllt ist wird der Kolben 3b nach oben bewegt S um, über die rohrförmige Kolbenstange 2b, den Korpus des doppelt wirkenden Ventils 7b nach oben zu bewegen und dabei die Dichtung 12b aus ihrem Sitz zu heben um den Abfluss der Flüssigkeitsdosis W durch die Bohrungen 6b, den Hohlraum der rohrförmigen Kolbenstange 2b, den Abflussstutzen 14b und das Verbindungsrohr 18b, in die Knetmaschine C zu leiten. Der Abfluss der Flüssigkeitsdosis W erfolgt nur infolge Betätigung O des Ventils 8b für den Zufluss der filtrierten atmosphärischen Luft L über die Öffnung 16b, dabei wird die Ventilstange 9a durch den, vom Korpus 7b des doppelt wirkenden Ventils radial abstehenden, Kragen 10b während des Hubes nach oben, betätigt. Durch diesen Hub wird auch der Zufluss der Flüssigkeit W aus dem Behälter durch die Wirkung der Dichtung 11b im entsprechenden Sitz im Kopfteil 15b des Messbechers 5b unterbrochen. Während der folgenden Beladung des Messbehälters 5b (Fig. 2) erfolgt die Rückstellung in Schließstellung des Ventils 8b durch eine über eine Stellschraube 17b einstellbare Feder sobald der Kragen 10b mit dem Ventilkorpus sich nach unten bewegt hat und der Zufluss für die Flüssigkeit W in den Messbecher frei ist.

Die Erfindung schließt nicht aus, dass der Zylinder 4b und der entsprechende Kolben 3b koaxial über dem Messbehälter 5b mit Kopfteil 15b angeordnet sind; in diesem Fall wird der Abfluss aus dem Messbehälter 5b durch einen einfachen Stutzen mit innenliegendem Sitz für die untere Dichtung 12b des Ventiles 7b, erfolgen.

## Patentansprüche

1. Vorrichtung zur Dosierung und Einbringung von Zutaten in eine Knetmaschine (C) zur Herstellung kleiner Teigmengen für die Zubereitung einzelner Pizzas, Fladen oder dergleichen, **dadurch gekennzeichnet, dass** sei es für die mehlartigen Zutaten (F) als auch für die flüssigen Zutaten (W) jeweils ein spezifischer Messbecher (11a, 5b) vorgesehen ist welcher unterhalb des betreffenden Behälters der Zutaten und oberhalb der Knetmaschine (C) angeordnet ist und in welchen die Zutaten durch Gefälle zuströmen, bzw. aus welchen sie durch Gefälle abströmen.

2. Vorrichtung zur Dosierung und Einbringung von Zutaten, gemäß Anspruch 1, **dadurch gekennzeichnet, dass** der Messbecher (11a) für die mehlartigen Zutaten (F) den Einbringungs- und Verbindungskanal zwischen dem Behälter (1a, 2a, 3a) für die mehlartigen Zutaten (F) und der Knetmaschine (C) bildet, dass der Schieber (19) der Beladungsöffnung der Knetmaschine (C) den Boden des Messbechers (11a) bildet, dass die mehlartigen Zutaten (F) von einer speichenradförmigen Ladevorrichtung (9a) welche drehbar (R) im Innern des Behälters (1a, 2a, 3a) gelagert ist über die obere Öffnung des Messbehälters befördert werden und dass im Innern des Messbechers (11a) ein Stößel (12a) wirkt (V) um die mehlartigen Zutaten (F) zu komprimieren und infolge Öffnung des Schiebers (19) diese in die Knetmaschine (C) zu befördern.

3. Vorrichtung zur Dosierung und Einbringung von Zutaten, gemäß Anspruch 1, **dadurch gekennzeichnet, dass** der Messbecher (5b) für die flüssigen Zutaten (W) im Innern ein doppelt wirkendes axial verschiebbares (D, S) Ventil (7b) aufweist welches mit zwei getrennten unter sich distanzierten Dichtungen (11b, 12b) ausgestattet ist, von welchen die obere (11b) bei oberer Arbeitsstellung des Ventils (7b) den Zufluss der Flüssigkeit (W) unterbindet während die untere (12b) in unterer Arbeitsstellung des Ventils (7b) den Abfluss der Flüssigkeitsdosis unterbindet und dass im oberen Bereich im Kopfteil (15b) des Messbechers (5b) ein Ventil (18b) für den Zufluss von filtrierter atmosphärischer Luft (L) in den Hohlraum des Messbechers (5b) vorgesehen ist.

4. Vorrichtung zur Dosierung und Einbringung von Zutaten, gemäß den Ansprüchen 1 und 3, **dadurch gekennzeichnet, dass** das doppelt wirkende Ventil (7b) einen radial vorspringenden umlaufenden Kragen (10b) für die Betätigung des Ventils (8b) für den Zufluss atmosphärischer Luft (L) aufweist.

5. Vorrichtung zur Dosierung und Einbringung von Zutaten, gemäß den Ansprüchen 1, 3 und 4, **dadurch gekennzeichnet, dass** die Betätigung des doppelt wirkenden Ventils (7b) durch einen, innerhalb eines Zylinders (4b) durch ein Druckmittel (P, P1) bewegten, Kolben (3b) erfolgt, wobei das obere Ende der Stange (2b) des Kolbens (3b) mit dem Ventil (7b) verbunden ist und dass der Abfluss der Füssigkeitsdosis (W) aus dem Messbecher (5b) zur Knetmaschine (C) durch die Kolbenstange (2b) erfolgt, wobei die Flüssigkeit radiale Bohrungen (6b) im oberen Bereich der Stange (2b) durchfließt welche mit der axialen Bohrung der Stange kommunizieren um am unteren Ende der Kolbenstange auszutreten und über das Verbindungsrohr (18b) in die Knetmaschine (C) zu gelangen.

6. Vorrichtung zur Dosierung und Einbringung von Zutaten, gemäß den Ansprüchen 1, 3 e 4, **dadurch gekennzeichnet, dass** die Betätigung des doppelt wirkenden Ventils (7b) elektrisch oder mechanisch erfolgt.

7. Vorrichtung zur Dosierung und Einbringung von Zutaten, gemäß den Ansprüchen 1, 3, 4, 5, 6, **dadurch gekennzeichnet, dass** der Kopfteil (15b) in den oberen Teil des Messbechers (5b) eingeschraubt ist.

8. Vorrichtung zur Dosierung und Einbringung von Zutaten, gemäß den Ansprüchen 1, 3, 4, 5, 6, 7,

9. Verfahren zur Dosierung und Einbringung von Zutaten in eine Knetmaschine mittels Vorrichtung gemäß den Ansprüchen von 1 bis 8, **dadurch gekennzeichnet, dass** die Dosierung der mehlartigen Zutaten (F) und auch deren Einbringung getrennt von der Dosierung und der Einbringung der flüssigen Zutaten (W) erfolgt, dass die Dosierung sei es der mehlartigen Zutaten (F) als auch jene der flüssigen Zutaten (W) durch Gefälle der Zutaten in einen Messbecher (11a, 5b) erfolgt welcher auf einem niedrigeren Niveau als der entsprechende Behälter vorgesehen ist und dass die Dosis der mehlartigen Zutaten durch Verändern der Anzahl der durch den Stößel (12a) ausgeführten Komprimierungszyklen und/oder durch Verändern der Komprimierungskraft erfolgt während die Dosis der flüssigen Zutaten durch Verändern des Volumens des Messbechers (5b) durch Einlegen von Ringen (5d), welche unterschiedliche Volumen im Innern des Messbechers (5b) einnehmen, erfolgt.

10. Verfahren zur Dosierung und Einbringung von Zutaten gemäß Anspruch 9, **dadurch gekennzeichnet, dass** der Abfluss der flüssigen Zutaten (W) aus dem Messbecher (5b) durch Öffnen des Abflussventils 12b infolge der Öffnung des Ventils (8b) für den Zufluss von filtrierter atmosphärischer Luft (L) in den Innenraum des Messbechers (5b) erfolgt.
